# EUROPEAN PATENT SPECIFICATION

(11) **EP 0 740 187 B1**
(45) Date of publication and mention of the grant of the patent: **23.06.2004**
(21) Application number: 95302888.3
(22) Date of filing: 28.04.1995
(51) Int. Cl.: G02F 1/1343

(54) **Electro-optic display**
Elektrooptische Anzeigevorrichtung
Afficheur électro-optique

(43) Date of publication of application: 30.10.1996
(73) Proprietor: Hewlett-Packard Company, A Delaware Corporation, Palo Alto, CA 94304 (US)
(72) Inventor: Geisow, Adrian Derek, Avon BS20 9Qs (GB); Rudin, John Christopher, Bristol BS7 9AW (GB)
(74) Representative: Newell, William Joseph

(56) References cited:
- EP-A- 0 462 619
- US-A- 4 824 218
- PATENT ABSTRACTS OF JAPAN vol. 011 no. 308 (P-624) ,8 October 1987 & JP-A-62 100739 (MATSUSHITA ELECTRIC IND CO LTD) 11 May 1987,

## Description

### FIELD OF THE INVENTION

This invention relates to an electro-optic display.

### BACKGROUND OF THE INVENTION

Many computer displays have a limited physical resolution - typically 70-100 dots per inch (2.76 to 3.94 dots per mm). Since the display is composed of an array or rectangular pixels, each of which is either ON or OFF, the edges of text, lines, etc that are displayed may often have a jagged "staircase" effect which is visually disturbing.

An attempt to address this problem has been proposed in JP-A-3142260, where each pixel is effectively divided into four slices. The image to be displayed is analysed and two-bit pixel data is added to each pixel to turn on selected pixel slices during a pixel sub-scanning period. However, by its nature this system is only capable of modulating the pixel output slice-wise and in many instances this will not give good smoothing, particularly where the edge to be smoothed is nearly perpendicular to the slice direction of the pixels. Also the system turns on either two or four slices during each pixel sub-scanning period and there is no continuous gradation of intensity within the pixel.

US-A-4824218 discloses an arrangement in which a layer of electo-optic material is disposed between two orthogonally extending sets of row and column electrodes. Each electrode comprises two conductive tracks connected to opposed edges of a resistive track to provide "stripe" electrodes.

### SUMMARY OF THE INVENTION

We have therefore designed an electro-optic display in which the optical output, for example brightness, opacity, polarization, etc, may be varied non-uniformly across the pixel, i.e. in a direction transverse to the thickness of the electro-optic layer, but without subdividing the pixel into individually addressed sub-pixels.

Accordingly, in one aspect of this invention there is provided a display for displaying an image, said display comprising:
a layer of electro-optic material and means for applying an electrical field whose magnitude varies in a direction transverse to the thickness of said layer, thereby to provide in use a non-uniform optical output across said layer,
wherein said means for applying includes an electrically resistive layer and a plurality of point electrodes electrically connected to said layer for applying respective independently controllable voltages to respective points or regions in said resistive layer.

By this arrangement, the electrical field may be configured to generate a wide range of different non-uniform outputs.

The electro-optic material may have a steep or "fast" electro-optic curve, i.e. where the electro-optic effect switches state abruptly at a particular threshold voltage, so that the optical output at a particular point will vary between two generally discrete levels, dependent on whether the field strength at that point is above or below the threshold voltage. In general the boundary between ON and OFF regions will be determined by an equi-potential line on the notional voltage surface of magnitude corresponding to said threshold voltage.

The electro-optic material may have a shallow or "slow" electro-optic curve, with the output varying continuously between ON and OFF through grey levels, so that the optical output may be shaded, generally in accordance with the magnitude of the electrical field.

In one arrangement, said electrically resistive layer is discontinuous, comprising an array of generally rectangular electrically resistive elements each defining a pixel with a point electrode means at each corner of each rectangular element, operable to define a notional voltage surface across said element. In this arrangement, each rectangular element effectively interpolates the four corner voltage values across the element and, for an electro-optic material with a steep curve, at each point within the pixel where the voltage passes the threshold value, the optical output changes.

We have also found that the ability to vary the optical output across a pixel instead of uniformly over the whole pixel means that we can provide displays which provide an effect similar to the half-tone type of process. In one arrangement the image is made up of pixels each containing a dot of controllably variable size from zero to fully filling a pixel, or even extending beyond its nominal boundary. Thus a display may comprise a generally continuous resistive layer of electrodes with the point electrodes arrayed in an array across the resistive layer, whereby an image may be created by a display of variable size dots.

Preferably, said resistive layer is provided on a substrate and said electro-optic layer is disposed between said resistive layer and a transparent conduction layer which acts as a voltage ground plane.

The electro-optic material may comprise a liquid crystal material such as twisted nematic, supertwist nematic, polymer dispersed liquid crystal (PDLC), or ferroelectric materials. Alternatively it may comprise other electro-optic materials or devices, such as field emissive devices.

In operation of a typical example, the display driver analyses the image to be displayed to determine those pixels where some form of intra-pixel variation is required, for example where the pixel is lying on an edge of the image or where grey-scaling or half toning is required. For each such pixel, the display driver determines the desired boundary lines between ON and OFF, and the electrical field intensity required, and then selects suitable voltages to be applied to the pixel to generate the required variation or level of electrical field across the pixel.

In another aspect, this invention provides a method for displaying an image on a display having a layer of electro-optic material and a plurality of point electrodes electrically connected to said layer for applying an electrical field whose magnitude varies in a direction transverse to the thickness of said layer, thereby to provide in use a non-uniform optical output across said layer,
said method comprising the steps of applying different independently controllable voltages to at least two different point electrodes of said plurality to establish voltage gradients between said two different point electrodes across the resistive surface, thereby to drive the display such that a threshold voltage for the layer of electro-optic material is exceeded at a point between the two different point electrodes.

### BRIEF DESCRIPTION OF THE DRAWINGS

The invention may be performed in various ways and, by way of example only, certain embodiments thereof will now be described with reference to the accompanying drawings, in which:-
- Figure 1: illustrates schematically a. liquid crystal display device;
- Figure 2: shows typical voltage profiles applied across a pixel and the non-uniform output obtainable in the device of Figure 1, with Figure 2(a) and (b) showing the voltage profiles applied to the resistive layers above and below the electro-optic layer, Figure 2(c) showing the resultant electrical field set up across the pixel, and Figure 2(d) showing the non-uniform optical output obtained;
- Figure 3: illustrates schematically the pixel electrode scheme for a first embodiment of liquid crystal display device in accordance with the invention;
- Figure 4: shows in Figure 4(a) a typical voltage surface effected in the embodiment of Figure 2, and in Figure 4(b) the resultant non-uniform output obtained;
- Figure 5: illustrates schematically the pixel electrode scheme for a second embodiment of liquid crystal display in accordance with the invention, and
- Figure 6: shows in Figure 6(a) a typical voltage surface effected in the embodiment of Figure 5, and in Figure 6(b) the resultant non-uniform output obtained;

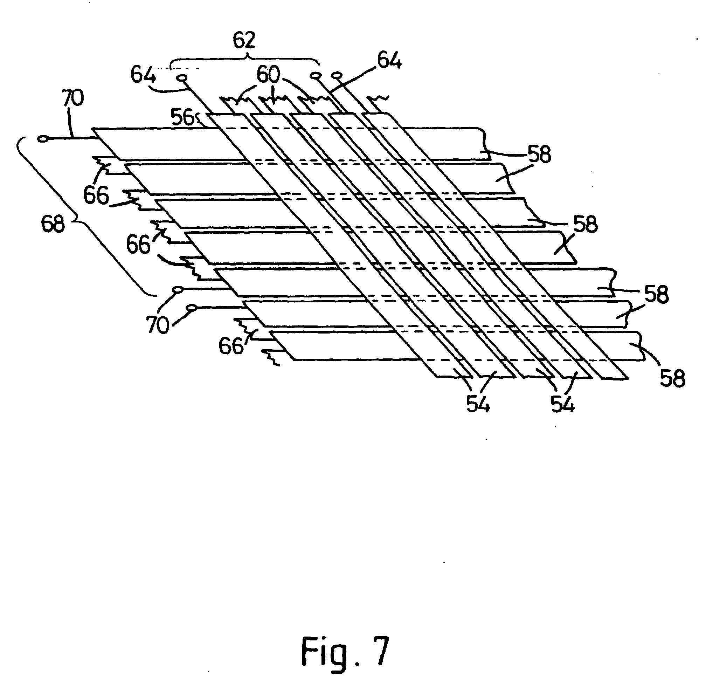

- Figure 7: illustrates schematically a further liquid crystal display.

### DESCRIPTION OF THE PREFERRED EMBODIMENTS

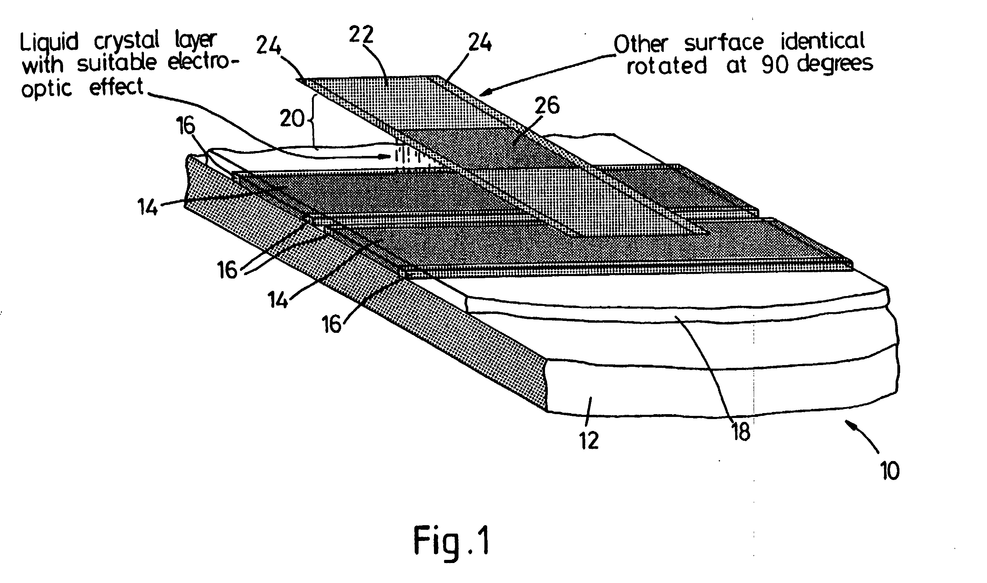

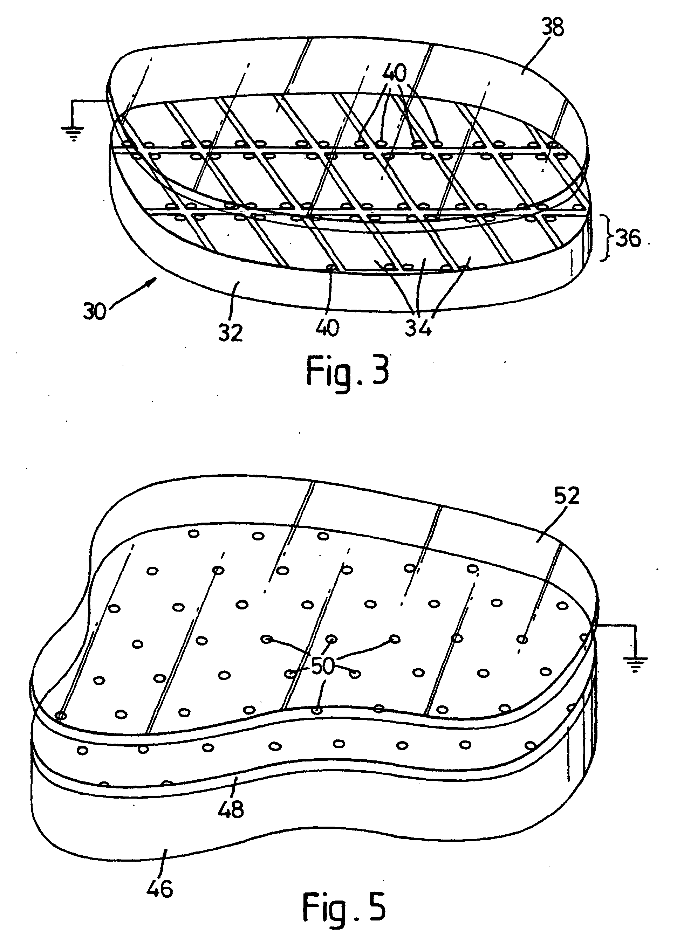

Referring to Figure 1, a first LCD display is illustrated by way of introduction to the principles incorporated in the exemplary embodiment of the invention illustrated in Figures 3 to 6. For clarity, the upper glass or polymer cover layer has been omitted, together with the usual polarising, barrier and retardation layers, but these are of generally conventional design. The display 10 comprises a lower glass or polymer substrate 12 on which a series of electrically resistive tracks 14 is formed, for example from a high resistivity linearly conductive Indium Tin Oxide (ITO) layer. To either side of each resistive track 14 is deposited a low resistivity conductor 16 in good electrical contact therewith, for example of chromium or gold, so that a generally linearly varying electrical field may be set up across the surface of the resistive track 14. In this example each resistive track 14 has its own pair of conductors 16, although in other arrangements, adjacent resistive tracks 14 may share the same conductor. A polymer alignment layer 18 overlies the tracks 14 and conductors 16 and serves to align the adjacent liquid crystal layer 20. Adjacent the upper surface of the liquid crystal layer 20 there is provided an orthogonal series of resistive tracks 22 and associated conductors 24 deposited on a cover layer (not shown). Only one upper resistive track 22 is shown, but it will be appreciated that in practice there will be many individually addressable parallel tracks 14 and 22 in both directions, defining rows and columns of pixels at each point where a track 22 crosses a track 16. A pixel area is shown at 26 in Figure 1.

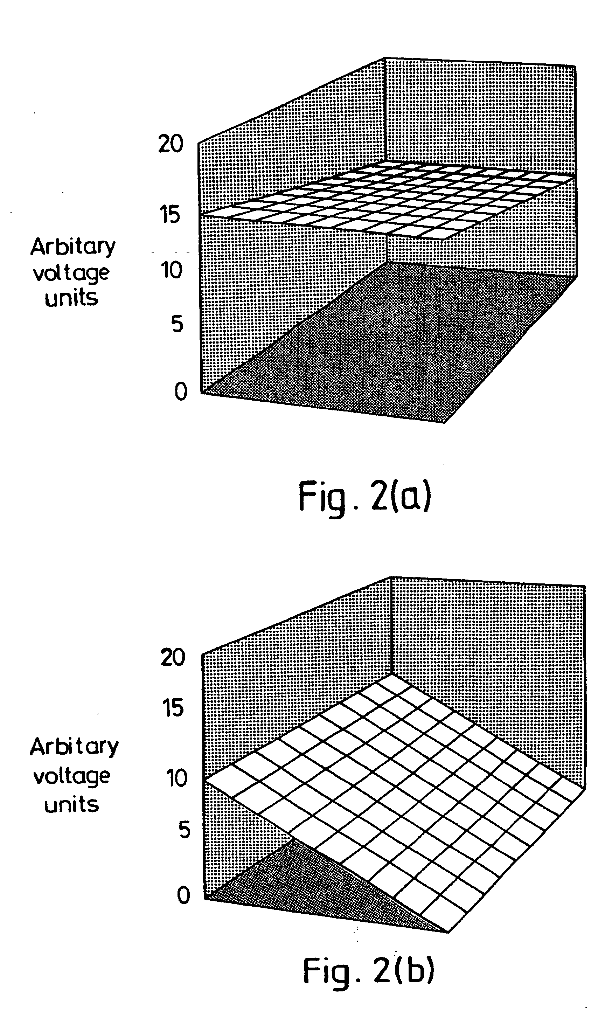

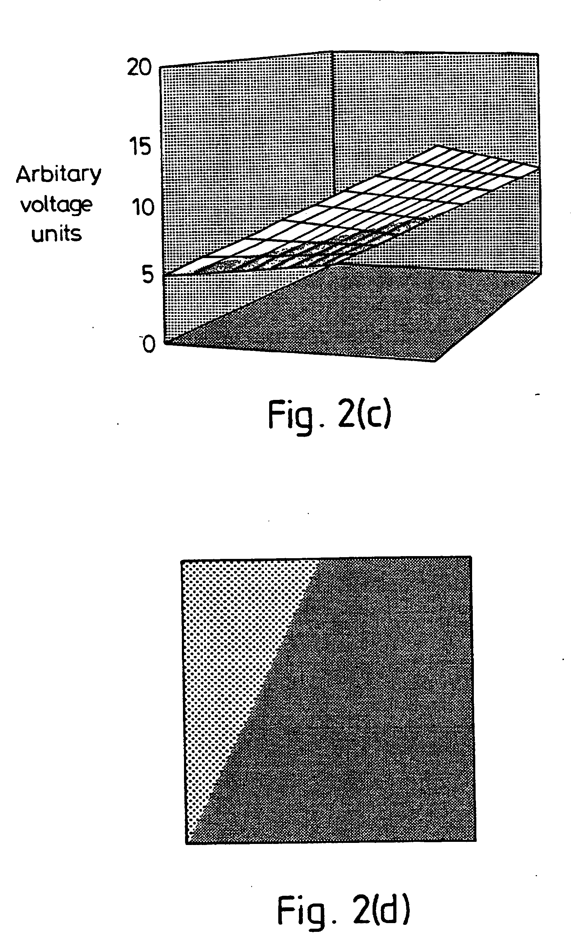

In use, the voltage profiles across the tracks 22 and 16 above and below a pixel 26 are selected to give a notional voltage surface across the pixel which generates the required electro-optic output. Thus, Figure 2 (a) shows a typical voltage profile applied to the upper track 22 which is effectively an inclined plane bridging the voltage levels applied to the conductors 24.

Figure 2(b) shows a typical profile applied to the lower track, which again is an inclined plane between the voltage levels applied to the conductors 16. The combined effect when these two profiles are applied at the same time is the voltage profile shown in Figure 2(c), which is the difference between the upper and lower profiles.

In this example, the electro-optic material has a steep or fast electro-optic curve, and the threshold voltage for the material is identified in Figure 2(c) by showing the portions below the threshold level in black. The effect on the pixel 26 is shown in Figure 2(d), where it will be seen that those areas within the pixel where the voltage across the electro-optic layer is higher than the threshold voltage are "ON" and thus black for this particular electro-optic material.

In use, an image to be displayed is analysed to determine those pixels where non-uniform output is required and then appropriate voltage levels determined for the conductors 16 and 24 having regard to the electro-optic curve of the material, the optical output required, and matrixing requirements, so that the variation in optical output of each pixel matches the requirements of the image at that location.

In the embodiment of Figure 3, the output of each pixel may be varied non-uniformly by a multi-point electrode array provided here in the rear structure of the display, with a layer adjacent the upper surface of the liquid crystal layer providing a common ground plane. For clarity, the usual polymer alignment, polarising, barrier and retardation layers are not shown.

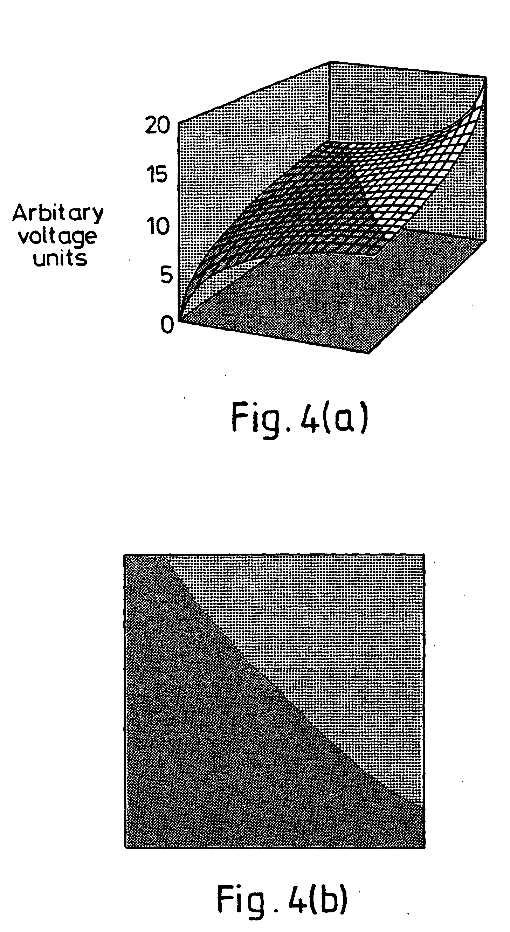

The display 30 includes a multi-layer rear structure 32 which defines an array of resistive surface elements 34, one adjacent each pixel, a liquid crystal layer 36, and a transparent common conductive layer 38 serving as a voltage ground plane adjacent the upper surface of the liquid crystal layer 36. Each resistive surface element 34 is energised by four control electrodes 40 or control points, one adjacent each corner of the surface element 34 respectively. The voltage surface generated at a pixel will depend on the levels of the voltages applied at the four corners, and can be adjusted by suitable selection of the four corner voltages, as illustrated in Figure 4(a). The resultant non-uniform output generated by the voltage surface of Figure 4(a) in an electro-optic material having a steep electro-optic effect is shown in Figure 4(b).

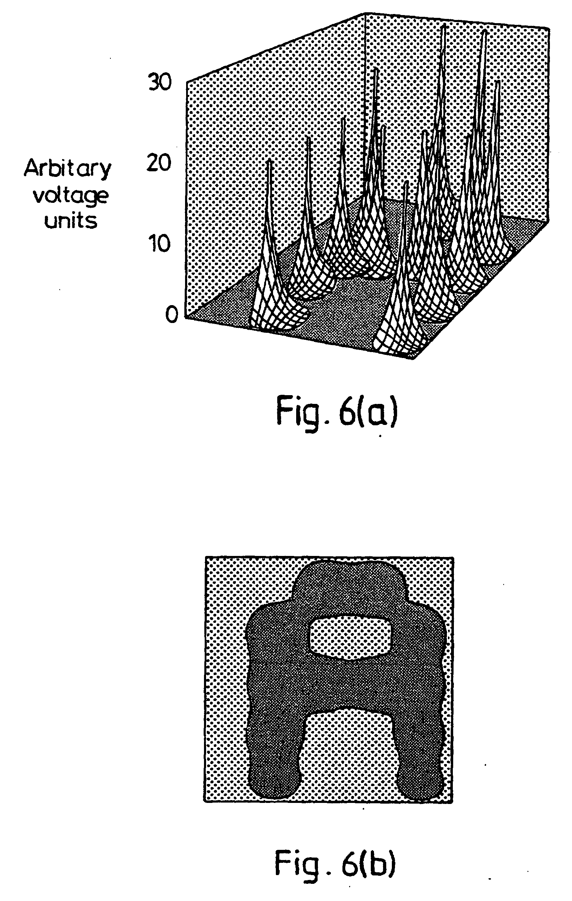

Referring now to Figure 5, this second embodiment is similar in may respects to that of Figure 3, as regards the general structure. In this embodiment, the display includes a rear multi-layer structure 46 on which is provided a continuous resistive layer 48, which is energised by an array of control electrodes 50 spaced closely across the layer. The liquid crystal layer is bounded on its other side by a transparent common conductive layer 52 serving as a ground plane. In use, the voltages applied to the electrodes may be selected to give a voltage surface including at each electrode location a voltage peak of selected magnitude as shown in Figure 6(a). Where the liquid crystal material has a steep electro-optic curve, these peaks translate into dots of variable radius dependent on the radius of the peak at the threshold voltage. The drive voltages to the electrodes are therefore selected to give the required dot size, and a typical resultant image is shown in Figure 6(b). This embodiment allows images to be displayed using a half-tone type of process. Dots of variable size may be generated and merged if required to give the final image. In this embodiment, each control electrode effectively defines an unbounded pixel which, depending on the voltage applied, may encroach into or merge with adjacent pixels.

The embodiments of Figures 3 and 5 may both use the multi-layer rear structure of the display to incorporate the electrode configurations required and this may be particularly suitable for displays using polymer dispersed liquid crystal material.

The above embodiments may be used with a wide range of combinations of electro-optic materials and addressing techniques. Thus the invention may also be embodied in Passive Matrix Twisted Nematic (TN) LCDs, Passive Matrix Supertwist Nematic (STN) LCDs, Active Matrix TN LCDs, Active Matrix Polymer Dispersed LEDs (PDLC), Passive Matrix Ferroelectric and Field Emissive Devices.

## Claims

1. A display (30) for displaying an image, said display comprising:
a layer (36) of electro-optic material and means (34, 40; 48,50) for applying an electrical field whose magnitude varies in a direction transverse to the thickness of said layer (36), thereby to provide in use a non-uniform optical output across said layer (36), wherein
said means for applying includes an electrically resistive layer (34;48) and a plurality of electrodes (40, 50) electrically connected to said resistive layer (34, 48); **characterised in that** said electrodes are point electrodes. for applying respective independently controllable voltages to respective points or regions in said resistive layer.

2. A display according to Claim 1, wherein said electrically resistive layer is discontinuous, comprising an array of generally rectangular electrically resistive elements (34) each defining a pixel with a point electrode (40) means at each corner of each rectangular element (34) , operable to define a notional voltage surface across said element (34).

3. A display according to Claim 1, wherein said resistive layer (48) is generally continuous and said point electrodes (50) are arranged in an array across the resistive layer, whereby the optical output comprises a plurality of dots of variable size.

4. A display according to Claim 3, including electrode drive means for applying said respective independently controllable voltages to the point electrodes thereby to display an image in half-tone.

5. A display according to any previous claim wherein said resistive layer (34; 48) is provided on a substrate (32, 46) and said electro-optic layer is disposed between said resistive layer and a transparent conduction layer (38; 52) which acts as a voltage ground plane.

6. A display according to any preceding Claim, wherein said optical output comprises the opacity, transmissivity or brightness of said pixel.

7. A display according to any preceding Claim, wherein the electro-optic curve of said material is relatively steep, whereby a given optical output within said pixel may vary between two generally discrete levels.

8. A display according to any of Claims 1-6 wherein the electro-optic curve of said material is relatively shallow, whereby a given optical output within said pixel may vary substantially continuously between two levels.

9. A method of displaying an image on a display having a layer (36) of electro-optic material and a plurality of point electrodes (40, 50) electrically connected to said layer (34, 48) for applying an electrical field whose magnitude varies in a direction transverse to the thickness of said layer (36), thereby to provide in use a non-uniform optical output across said layer (36),
said method comprising the steps of applying different independently controllable voltages to at least two different point electrodes of said plurality to establish voltage gradients between said two different point electrodes across the resistive surface, thereby to drive the display such that a threshold voltage for the layer of electro-optic material is exceeded at a point between the two different point electrodes.

## Patentansprüche

1. Eine Anzeige (30) zum Anzeigen eines Bildes, wobei die Anzeige folgende Merkmale aufweist:
eine Schicht (36) eines elektrooptischen Materials und eine Einrichtung (34, 40; 48,50), um ein elektrisches Feld anzulegen, dessen Größe in einer Richtung quer zu der Dicke der Schicht (36) variiert, um dadurch im Gebrauch eine nicht-gleichmäßige optische Ausgabe über die Schicht (36) zu liefern, wobei
die Einrichtung zum Anlegen eine elektrisch widerstandsbehaftete Schicht (34; 48) und eine Mehrzahl von Punktelektroden (40, 50), die mit der widerstandsbehafteten Schicht (34; 48) verbunden sind, umfaßt; **dadurch gekennzeichnet, daß** die Elektroden Punktelektroden zum Anlegen jeweiliger unabhängig steuerbarer Spannungen an jeweilige Punkte oder Regionen in der widerstandsbehafteten Schicht sind.

2. Eine Anzeige gemäß Anspruch 1, bei der die elektrisch widerstandsbehaftete Schicht diskontinuierlich ist und ein Array aus im allgemeinen rechteckigen elektrisch widerstandsbehafteten Elementen (34) aufweist, die jeweils ein Pixel mit einer Punktelektrodeneinrichtung (Punktelektrode 40) an jeder Ecke jedes rechteckigen Elements (34) definieren, die wirksam sind, um eine fiktive Spannungsoberfläche über das Element (34) zu definieren.

3. Eine Anzeige gemäß Anspruch 1, bei der die widerstandsbehaftete Schicht (48) allgemein kontinuierlich ist und die Punktelektroden (50) in einem Array über die widerstandsbehaftete Schicht angeordnet sind, wodurch die optische Ausgabe eine Mehrzahl von Punkten einer variablen Größe umfaßt.

4. Eine Anzeige gemäß Anspruch 3, die eine Elektrodentreibereinrichtung zum Anlegen der jeweiligen unabhängig steuerbaren Spannungen an die Punktelektroden, um dadurch ein Bild in einem Halbton anzuzeigen, umfaßt.

5. Eine Anzeige gemäß einem der vorhergehenden Ansprüche, bei der die widerstandsbehaftete Schicht (34; 48) auf einem Substrat (32, 46) vorgesehen ist und die elektrooptische Schicht zwischen der widerstandsbehafteten Schicht und einer transparenten Leitschicht (38; 52), die als Spannungsmasseebene fungiert, angeordnet ist.

6. Eine Anzeige gemäß einem der vorhergehenden Ansprüche, bei der die optische Ausgabe die Opazität, die spezifische Durchlässigkeit oder Helligkeit des Pixels umfaßt.

7. Eine Anzeige gemäß einem der vorhergehenden Ansprüche, bei der die elektrooptische Kurve des Materials relativ steil ist, wodurch eine gegebene optische Ausgabe in dem Pixel zwischen zwei allgemein diskreten Niveaus variieren kann.

8. Eine Anzeige gemäß einem der Ansprüche 1 bis 6, bei der die elektrooptische Kurve des Materials relativ flach ist, wodurch eine gegebene optische Ausgabe in dem Pixel im wesentlichen kontinuierlich zwischen zwei Niveaus variieren kann.

9. Ein Verfahren zum Anzeigen eines Bildes auf einer Anzeige, die eine Schicht (36) eines elektrooptischen Materials und eine Mehrzahl von Punktelektroden (40, 50) aufweist, die mit der Schicht (34; 48) elektrisch verbunden sind, um ein elektrisches Feld anzulegen, dessen Größe in einer Richtung quer zu der Dicke der Schicht (36) variiert, um dadurch im Gebrauch eine nicht-gleichmäßige optische Ausgabe über die Schicht (36) zu liefern,
wobei das Verfahren die Schritte des Anlegens unterschiedlicher unabhängig steuerbarer Spannungen an zumindest zwei unterschiedliche Punktelektroden der Mehrzahl, um Spannungsgradienten zwischen den zwei unterschiedlichen Punktelektroden über die widerstandsbehaftete Oberfläche einzurichten, aufweist, um dadurch die Anzeige derart zu treiben, daß eine Schwellenspannung für die Schicht des elektrooptischen Materials an einem Punkt zwischen den zwei unterschiedlichen Punktelektroden überschritten wird.

## Revendications

1. Affichage (30) pour afficher une image, ledit affichage comprenant :
une couche (36) de matériau électro-optique et un moyen (34, 40 ; 48, 50) pour appliquer un champ électrique dont l'amplitude varie dans un sens transversal par rapport à l'épaisseur de ladite couche (36), afin de fournir ainsi lors du fonctionnement une sortie optique non uniforme au travers de ladite couche (36), dans lequel
ledit moyen d'application comprend une couche électriquement résistive (34 ; 48) et une pluralité d'électrodes (40, 50) connectées électriquement à ladite couche résistive (34, 48) ; **caractérisé en ce que** lesdites électrodes sont des électrodes de point pour appliquer des tensions respectives indépendamment contrôlables à des points ou des zones respectifs de ladite couche résistive.

2. Affichage selon la revendication 1, dans lequel ladite couche électriquement résistive est discontinue, comprenant une matrice d'éléments électriquement résistifs généralement rectangulaires (34) définissant chacun un pixel avec une électrode de point (40) à chaque coin de chaque élément rectangulaire (34), pouvant être utilisée pour définir une surface de tension théorique au travers dudit élément (34).

3. Affichage selon la revendication 1, dans lequel ladite couche résistive (48) est généralement continue et lesdites électrodes de point (50) sont disposées dans une matrice au travers de la couche résistive, grâce à quoi la sortie optique comprend une pluralité de points de taille variable.

4. Affichage selon la revendication 3, comprenant un moyen de pilotage d'électrode pour appliquer lesdites tensions respectives indépendamment contrôlables aux électrodes de point afin d'afficher ainsi une image en demi-teinte.

5. Affichage selon l'une quelconque des revendications précédentes dans lequel ladite couche résistive (34 ; 48) est placée sur un substrat (32, 46) et ladite couche électro-optique est placée entre ladite couche résistive et une couche de conduction transparente (38 ; 52) servant de plan de masse.

6. Affichage selon l'une quelconque des revendications précédentes, dans lequel ladite sortie optique comprend l'opacité, la transmissivité ou la luminosité dudit pixel.

7. Affichage selon l'une quelconque des revendications précédentes, dans lequel la courbe électro-optique dudit matériau est relativement inclinée, grâce à quoi une sortie optique donnée à l'intérieur dudit pixel peut varier entre deux niveaux généralement discrets.

8. Affichage selon l'une quelconque des revendications précédentes, dans lequel la courbe électro-optique dudit matériau est relativement faible, grâce à quoi une sortie optique donnée à l'intérieur dudit pixel peut varier de manière presque continue entre deux niveaux.

9. Procédé d'affichage d'une image sur un affichage possédant une couche (36) de matériau électro-optique et une pluralité d'électrodes de point (40, 50) connectées électriquement à ladite couche (34, 48) pour appliquer un champ électrique dont l'amplitude varie dans un sens transversal par rapport à l'épaisseur de ladite couche (36), afin de fournir ainsi lors du fonctionnement une sortie optique non uniforme au travers de ladite couche (36),
ledit procédé comprenant les étapes consistant à appliquer des tensions différentes indépendamment contrôlables à au moins deux électrodes de point différentes de ladite pluralité afin d'établir des gradients de tension entre lesdites deux différentes électrodes de point au travers de la surface résistive, afin de piloter ainsi l'affichage de sorte qu'une tension de seuil pour la couche de matériau électro-optique soit dépassée au niveau d'un point entre les deux différentes électrodes de point.
